# EUROPÄISCHE PATENTSCHRIFT

(11) **EP 0 452 351 B1**
(45) Veröffentlichungstag und Bekanntmachung des Hinweises auf die Patenterteilung: **26.01.1994**
(21) Anmeldenummer: 90900862.5
(22) Anmeldetag: 23.12.1989
(51) Int. Cl.: C04B 35/00, C01G 15/00

(54) **FORMKÖRPER AUS GESINTERTEM STRONTIUM/CALCIUM-INDAT UND SEINE VERWENDUNG**
SINTERED STRONTIUM/CALCIUM INDATE MOULDING AND USE THEREOF
CORPS MOULE EN INDAT DE STRONTIUM/CALCIUM FRITTE ET SON UTILISATION

(30) Priorität: 29.12.1988 DE 3844208
(43) Veröffentlichungstag der Anmeldung: 23.10.1991
(73) Patentinhaber: HOECHST AKTIENGESELLSCHAFT, 65926 Frankfurt am Main (DE)
(72) Erfinder: BECKER, Winfried, D-6233 Kelkheim (DE)
(86) Internationale Anmeldenummer: EP8901606
(87) Internationale Veröffentlichungsnummer: WO9007476

(56) Entgegenhaltungen:
- GB-B- 977 835
- Z. anorg. allg. Chem., volume 435, 1977, W. Muschnik et al.: "Zur Kenntnis von SrCa2In206", see page 56 - page 60

## Beschreibung

Die vorliegende Erfindung betrifft Formkörper aus gesintertem Strontiumindat der Formel (Sr,Ca)In₂O₄, ein Verfahren zu ihrer Herstellung und die Verwendung dieser Formkörper als Gefäßmaterial für chemische Umsetzungen, bei denen Wismutoxid, gegebenenfalls zusammen mit Erdalkalioxiden, bei hohen Temperaturen als Reaktionspartner auftreten.

Die Verbindung Strontiumindat ist seit längerem bekannt (Z. Naturforschung 19b (1964) 955) CaIn₂O₄ ist isotyp zu SrIn₂O₄. Die Kristallstruktur dieser Indate ist bekannt (Z. Anorg. Allg. Chemie 398 (1973) 24). Die Indate lassen sich aus In₂O₃ und Erdalkalimetalloxid durch Glühen bei 1200 °C erhalten.

Wismutoxid verhält sich - insbesondere bei höheren Temperaturen - deutlich basisch. Es schmilzt bei 824 °C und greift Schmelztiegel und Silikate stark an. Nach Beobachtungen von Arpe und Müller-Buschbaum (J. Inorg. Nucl. Chem. 39 (1977) 233) wird auch Al₂O₃ aufgelöst und in Wismutaluminate überführt.

Es bestand daher die Aufgabe ein Tiegelmaterial zu finden, das bei hohen Temperaturen, insbesondere bei Temperaturen oberhalb 800 °C, gegenüber geschmolzenem Wismut-3-oxid beständig ist. Die vorliegende Erfindung löst dieses Problem.

Der Erfindung liegt die Erkenntnis zugrunde, daß Formkörper aus gesintertem Strontium/Calcium-Indat, (Sr,Ca)In₂O₄, auch bei hohen Temperaturen gegenüber geschmolzenem Wismut-3-oxid stabil sind.

Die wesentlichen Merkmale der Erfindung sind Gegenstand der unabhängigen Ansprüche 1, und 3 - 7.

Solche Formkörper lassen sich dadurch herstellen, daß man ein feines Pulver aus Strontiumindat, Calciumindat und/oder Mischkristallen der Formel SrₓCa₁₋ₓIn₂O₄ mit O<x<1, gegebenenfalls unter Zusatz von Bindemitteln, zu einem Formkörper verpreßt und diesen mehrere Stunden auf Temperaturen von 1000 bis 1500 °C erhitzt. Dabei kommt es zum Sintern. Die Sinterzeit beträgt auch bei 1500 °C mindestens 2 Stunden. Bei tieferen Temperaturen dauert das Sintern länger. Es sollte nicht unnötig fortgesetzt werden, da sonst die Ausbildung großer Kristalle begünstigt wird, was die Festigkeit der Formkörper verschlechtert.

Calciumindat schmilzt oberhalb von 1500 °C. Strontiumindat schmilzt erst oberhalb von 1600 °C. Es ist vorteilhaft, das zum Sintern eingesetzte Strontiumindatpulver fein zu mahlen. Die Formgebung kann nach bekannten Verfahren erfolgen, z. B. durch Extrudieren (Stangen, Rohre) oder durch Verpressen (einaxial oder isostatisch). Man kann auch Strontiumindat aufschmelzen und in Formen erstarren lassen, um Formkörper zu gewinnen.
Die erhaltenen Formkörper können die Gestalt von Kugeln, Rohren, Barren oder Stäben, vorzugsweise von Reaktionsgefäßen wie Tiegeln, oder die Form von Platten annehmen. Tiegel lassen sich auch durch Ausfräsen aus einem Barren herstellen.

Eine Hauptschwierigkeit bei der Herstellung dünner supraleitender Schichten aus den bisher bekannten oxidischen Materialien auf einen Träger ist die Verunreinigung des Supraleiters durch das Trägermaterial. Nach dem Aufbringen der oxidischen Materialien ist in der Regel eine thermische Nachbehandlung notwendig, um den Sauerstoffgehalt in der supraleitenden Schicht einzustellen. Dabei reagiert der Supraleiter mit dem Substratmaterial. Dies ist nachweisbar durch Messung des Konzentrationsprofils der Kationen des Trägermaterials in der Supraleiterschicht in Abhängigkeit von der Entfernung von der Oberfläche des Trägers. Durch Kationen verunreinigte Schichten haben sehr schlechte supraleitende Eigenschaften (geringes T_{c}, breite Übergänge). (Sr,Ca)In₂O₄ ist gegenüber den bekannten oxidischen Supraleitermaterialien (enthaltend Bi₂O₃, SrO, CaO, CuO ) auch bei 1000 °C inert. Es eignet sich daher in Form von keramischen Sinterkörpern oder aus dem Schmelzpunkt erstarrter Körper, insbesondere in Form von Platten, oder in Form von Einkristallen als Substratmaterial bei der Herstellung dünner supraleitender Schichten mit Verfahren wie z.B. CVD (Chemical Vapor Deposition), Spray-Coating, Sputtern oder Ionenstrahlverdampfen, bei denen eine thermische Nachbehandlung der beschichteten Substrate notwendig ist. Beispielsweise lassen sich dünne Oxidschichten (unter 5 µm) durch Ionenstrahlverdampfen, Sputtern, Laserverdampfen oder CVD und dicke Oxidschichten (dicker als 5 µm, insbesondere dicker als 10 µm) durch Siebdrucken oder Plasmaspritzen auftragen.

Gesintertes Indat (Sr, Ca)In₂O₄ eignet sich ferner vorzüglich als Tiegelmaterial für die Feststoffreaktion der Oxide von Wismut, Strontium, Calcium und Kupfer unter Bildung von Phasen mit HT-Supraleitfähigkeit und allgemein zur Herstellung von Keramiken mit einem Gehalt an Bi, In oder Tl. Dies ist insofern von Interesse, als die Bildung der supraleitenden Phase im System Bi-Sr-Ca-Cu-O, die eine Sprungtemperatur von 110 K besitzt, erst bei Temperaturen dicht unterhalb des Schmelzpunktes des Gemisches stattfindet. Wenn man solche Sinterversuche in Tiegeln oder auf Trägerplatten aus Al₂O₃ durchführt, werden diese stark angegriffen und verunreinigte Produkte mit unbefriedigender Qualität, d.h. geringem Anteil an der 110 K-Phase, erhalten. Wenn man dagegen die Reaktion auf einer Unterlage aus gesintertem Strontiumindat, Calciumindat oder einem Sr-Ca-Indat durchführt, wird, unter sonst gleichen Bedingungen, der Anteil der gesuchten 110 K-Phase erhöht. Darüberhinaus wird es möglich, mit höheren Sintertemperaturen zu arbeiten. Es ist nicht erforderlich, daß der Träger aus massivem Indat besteht. Vorzugsweise besteht er aus Keramik, z.B. Al₂O₃, auf die eine dünne Schicht Indat, z.B. durch Plasmaspriken oder durch Siebdruck aufgetragen wurde.

An Stelle von reinem SrIn₂O₄ oder reinem CaIn₂O₄ lassen sich auch die Mischkristalle der Formel SrₓCa₁₋ₓIn₂O₄ mit O<x<1, insbesondere 0,91<x<1, insbesondere 0,91<x<1, einsetzen. Formkörper aus diesen Mischkristallen lassen sich durch Vermischen der beiden Indate oder ausgehend von dem Gemisch der drei Oxide im Molverhältnis In₂O₃:Erdalkalioxid von 1:1 durch Sintern oder Schmelzen herstellen und ebenso wie Formkörper aus reinem Strontiumindat verwenden.

Die Erfindung wird durch die Beispiele näher erläutert.

### Beispiel 1

Pulver aus SrIn₂O₄ wird gemäß H. Schwarz, D. Bommert; Z. Naturforsch. 19b (1964) 955 hergestellt. Es wird anschließend in Aceton als Mahlmedium zusammen mit Zirkondioxidkugeln (zehnfache Masse) in einer Atrittormühle 3 Stunden bei 1000 Upm gemahlen. Die Mahlkugeln werden abgesiebt und das Lösungsmittel in einem Rotationsverdampfer abdestilliert. Das zurückbleibende Pulver wird bei 80 °C getrocknet. Es läßt sich ohne Zusätze sowohl isostatisch als auch einaxial leicht zu Platten oder Barren verpressen. Weitere Untersuchungen zeigten, daß das Material ab 1000 °C sintert.

Ein mit 300 MPa isostatisch gepreßter Barren (ca. 1x2x6 cm) besitzt eine Gründichte von 63 % der theoretisch erreichbaren Dichte (Dichte des Einkristalls 6.907 g/cm³). Er wird nach folgendem Programm gesintert: in 2 h auf 1000 °C heizen, in 5 h weiter auf 1500 °C aufheizen, diese Temperatur 5 h halten und anschließend in 5 h auf 100 °C abkühlen. Der gesinterte Barren hat eine Dichte von 6.413 g/cm³ (d. h. 93 % der theor. erreichbaren Dichte) Er kann anschließend bearbeitet, z. B. in Platten zersägt werden.

### Beispiel 2

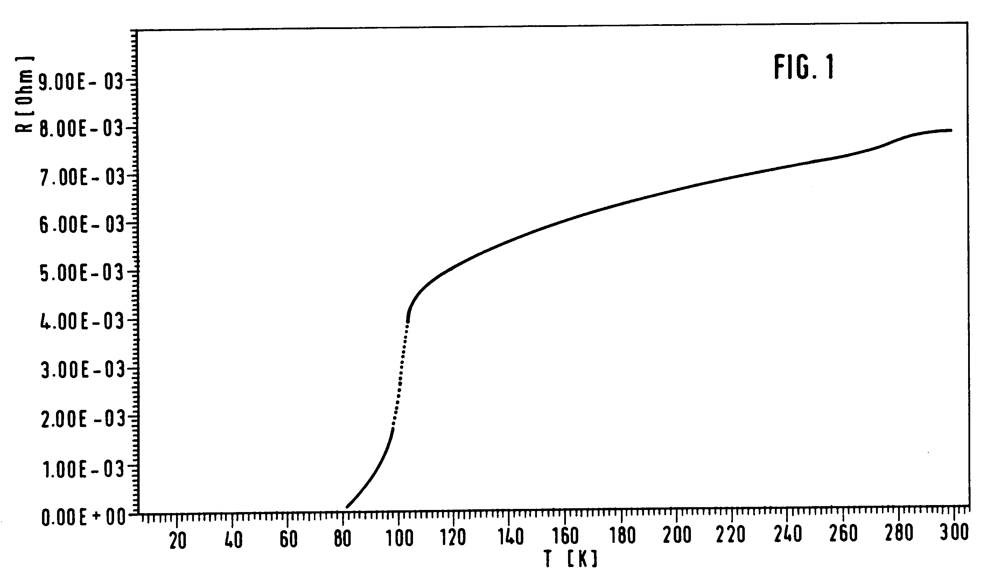

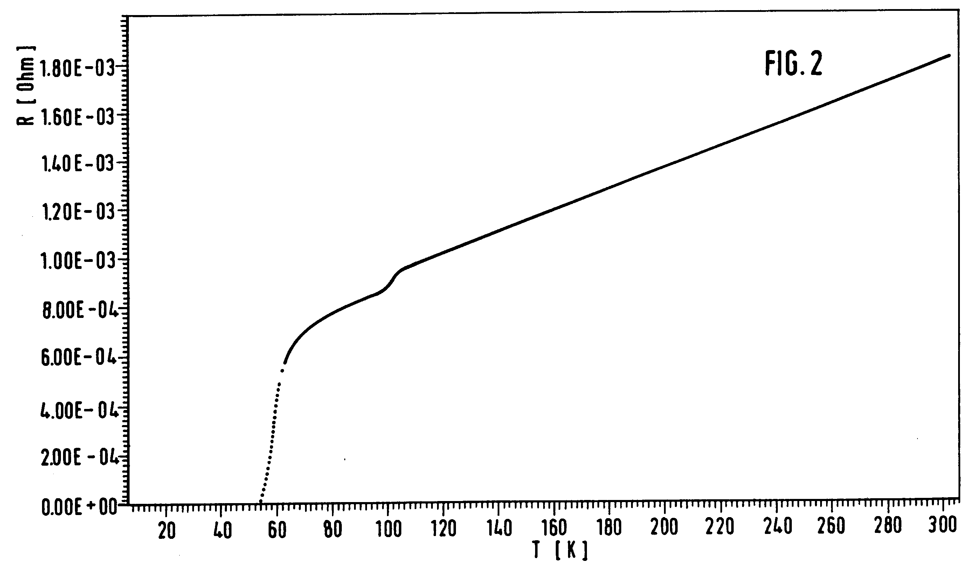

Eine nach Beispiel 1 hergestellte Platte aus SrIn₂O₄ (Durchmesser 40 mm, 3 mm dick) wird als Brennunterlage für einen uniaxial gepreßten, aus dem Gemisch der Metalloxide bestehenden Formkörper (Durchmesser 10 mm, Dicke 1 mm) mit der Brutto-Zusammensetzung Bi₄Sr₃Ca₃Cu₆O_{18+α} benutzt. Nach einer 100-stündigen Behandlung bei 845 °C wird die Probe dem Ofen entnommen. Der Formkörper reagiert nicht mit dem Substratmaterial. Aus dem Formkörper austretende Schmelze benetzt die SrIn₂O₄-Platte nicht. Der Sinterkörper klebt nach dem Erkalten nicht an der Oberfläche der Platte. Im Sinterkörper ist kein Indium nachzuweisen. Die Leitfähigkeitsmessung zeigt einen supraleitenden Übergang bei 105 K (Fig. 1 gemessen beim Aufwärmen, 0,01 A). Eine unter gleichen Bedingungen auf einer Brennunterlage aus Aluminiumoxid gesinterte Probe hat eine kritische Temperatur von ca. 60 K mit einem nur geringen Anteil einer Phase, die bei 105 K supraleitend wird (Fig. 2 gemessen wie Fig. 1).

### Beispiel 3

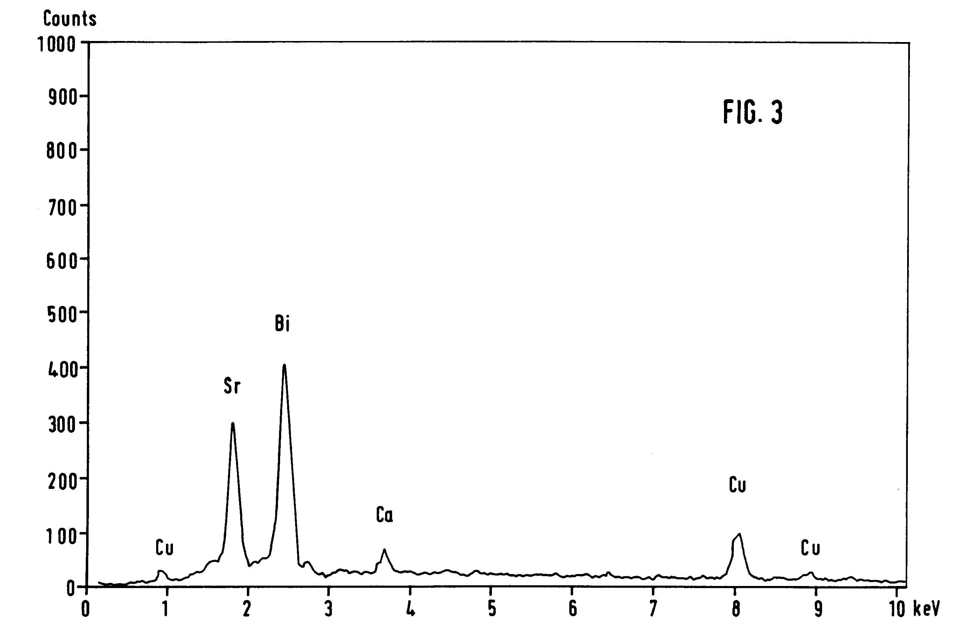

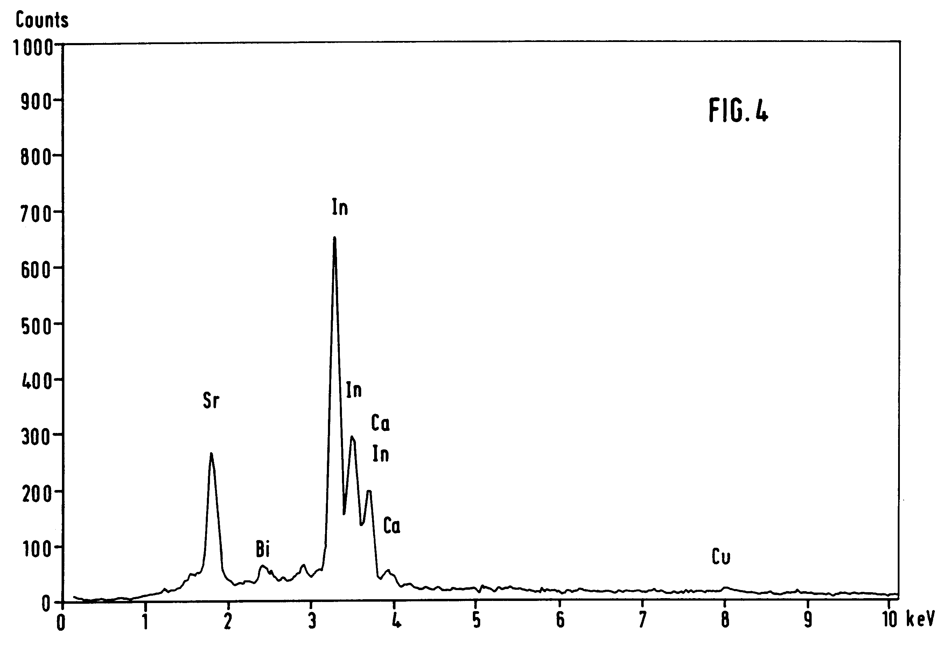

Mischkristalle der Zusammensetzung (Sr,Ca)₁In₂O₄ (Sr:Ca = 2:1) befanden sich ca. 10 Stunden in einer Schmelze eines Bi/Sr/Ca/Cu-Supraleiters. EDX-Analysen zeigen keine Verunreinigung des Supraleiters durch Indium (Fig. 3). In den Mischkristallen selbst sind anschließend nur Spuren von Wismut und Kupfer nachzuweisen (Fig. 4).

### Beispiel 4

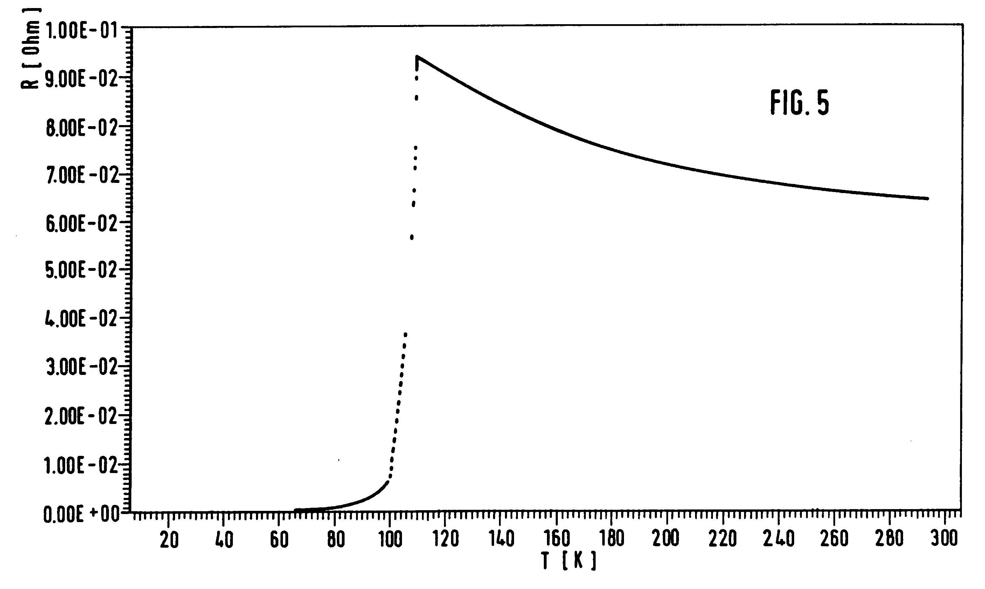

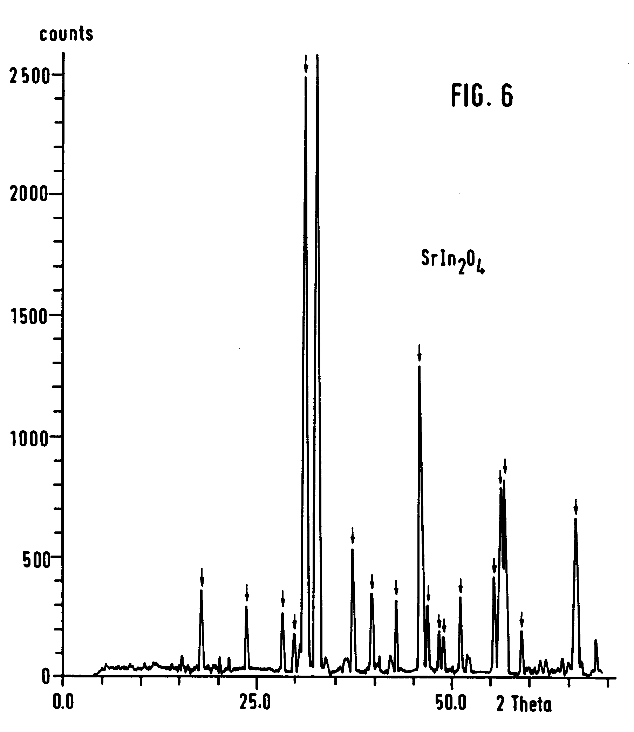

Es werden 3,1250 g In₂O₃, 1,7508 g Bi₂O₃, 0,8763 g CaO, 4,4736 g SrCO₃ und 2,4106 g CuO eingewogen und in einem Achatmörser innig gemischt. Die Mischung wird anschließend in einem Korundtiegel 6 Stunden bei 800 °C vorreagiert. Die Temperatur wird dann auf 1000 °C gesteigert und 6 h bei 1000 °C gehalten. Danach kühlt man in 4 Stunden auf 300 °C ab und entnimmt die Probe mit der Bruttozusammensetzung Bi_{0,5}In_{1,5}Sr₂CaCu₂Oₓ. Die Probe wird wiederum in einem Achatmörser homogenisiert und dann zu Tabletten (Durchmesser: 1 cm, Dicke: ca. 2 mm) verpreßt. Diese werden dann 30 Stunden bei 1000 °C auf einer Unterlage aus Al₂O₃ gesintert und nach Abkühlung auf 100 °C (3 Stunden) dem Ofen entnommen. Eine so hergestellte Probe zeigt eine kritische Temperatur von 110 K (Fig. 5). Im Röntgendiagramm findet man im wesentlichen SrIn₂O₄ und Bi-haltige supraleitende Phasen. Das Röntgendiagramm von SrIn₂O₄ ist in Fig. 6 dargestellt.
Der Vergleich von Fig. 5 mit Fig. 2 zeigt, daß die Anwesenheit von SrIn₂O₄ im Reaktionsansatz die Bildung der 110 K-Phase günstig beeinflußt.

### Beispiel 5

200 g Strontiumindat werden mit 2500 g Mahlkugeln aus ZrO₂ in Ethanol als Mahlmedium 4 Stunden in einer Attritormühle bei 500 Upm. gemahlen. Man entfernt die Mahlkugeln durch Absieben und das Lösungsmittel in einem Rotationsverdampfer. Das zurückbleibende Pulver wird bei 80 °C getrocknet.
200 g gemahlenes Strontiumindat-Pulver werden mit 85 ml Wasser und 4,15 g eines oligomeren Ammoniumpolyacrylats als Dispergiermittel versetzt und zusammen mit ca. 10 Mahlsteinen aus Al₂O₃ von insgesamt 20 g 24 Stunden auf dem Rollenbock gemischt.
Der entstandene Schlicker wird in eine Kegelstumpf-förmige Hohlform aus Gips eingegossen. Der Gips nimmt das Wasser des Schlickers unter Bildung einer Indat-Schicht auf. Nach ca. 15 - 30 Minuten wird der noch flüssige Teil des Schlickers wieder abgegossen. Es bleibt ein feuchter Kuchen mit einer Wandstärke von 1 - 4 mm zurück. Nach weiteren 1 - 2 Stunden ist dieser Tieglrohling soweit geschrumpft, daß er aus der Form entnommen werden kann. Er wird 5 Stunden im Exikator über Calziumchlorid getrocknet und anschließend gesintert. Dabei wird folgendes Temperaturprogramm verwendet:
In 90 Minuten aufheizen auf 200 °C; 1 Stunde bei 200 °C halten; in 90 Minuten weiter heizen auf 400 °C; 90 Minuten bei 400 °C halten; in 10 Stunden auf 1200 °C aufheizen; in einer Stunde weiter heizen auf 1500 °C; 2 Stunden halten bei 1500 °C und in 5 Stunden abkühlen auf 100 °C.

Es entsteht ein Tiegel aus gesintertem SrIn₂O₄ mit einer Dichte von 95 % der Theorie.

### Beispiel 6

Beispiel 5 wird wiederholt, wobei jedoch Ca-indat an Stelle von Sr-Indat verwendet wird. Das Temperprogramm für den getrockneten Tiegel-Rohling sieht wie folgt aus:
In 5 Stunden auf 150 °C aufheizen, die Temperatur in weiteren 5 Stunden auf 400 °C erhöhen (dabei wird das Dispergiermittel und die Feuchtigkeit entfernt). Anschließend wird die Temperatur in 5,5 Stunden auf 1200 °C und in einer Stunde auf 1500 °C gesteigert, bei 1500 °C zwei Stunden gehalten und in 5 Stunden auf 20 °C abgekühlt.

Zur Herstellung des Ausgangsprodukts wurde ein äquimolares Gemisch aus CaO und In₂O₃ 8 Stunden bei 1200 °C geglüht, das Pulver im Achatmörser homogenisiert und dann weitere 12 Stunden bei 1200 °C geglüht.

## Patentansprüche

1. Formkörper aus kompaktem, polykristallinen Indat der Formel SrₓCa₁₋ₓIn₂O₄ mit 0≦x≦1.

2. Formkörper gemäß Anspruch 1 in Form eines Reaktionsbehälters.

3. Verwendung eines Formkörpers aus gesintertem oder aus dem Schmelzfluß erstarrten Indat gemäß Anspruch 1 als Reaktionsgefäß für chemische Umsetzungen in Gegenwart von geschmolzenem Wismut-3-oxid bei Temperaturen von mindestens 800 °C.

4. Verwendung eines Formkörpers aus gesintertem oder aus dem Schmelzfluß erstarrten Indat gemäß Anspruch 1 als Reaktionsgefäß für chemische Umsetzungen in Gegenwart von Erdalkalioxiden bei Temperaturen von mindestens 800 °C.

5. Verwendung eines Formkörpers, insbesondere einer Platte, aus kompaktem Strontiumindat, SrIn₂O₄ zur Herstellung von Schichten aus supraleitenden oxidischem Material.

6. Verfahren zur Herstellung eines gesinterten Formkörpers, dadurch gekennzeichnet, daß man ein feines Pulver bestehend aus Calciumindat, Strontiumindat und/oder einem Indat der Formel SrₓCa₁₋ₓIn₂O₄ mit O<x<1, gegebenenfalls unter Zusatz eines Bindemittels, zu einem Formkörper verpreßt und diesen mehrere Stunden auf Temperaturen von 1000 bis 1500 °C erhitzt.

7. Verfahren zur Herstellung eines gesinterten Formkörpers bestehend aus Srₓ Ca₁₋ₓIn₂O₄ mit 0≦x≦1, dadurch gekennzeichnet, daß man ein pulverförmiges äquimolares Gemisch aus In₂O₃ und mindestens einem Erdalkalioxid der Gruppe CaO und SrO verformt und sintert oder aus dem Schmelzfluß erstarren läßt.

## Claims

1. A molding of compact polycrystalline indate of the formula SrₓCa₁₋ₓIn₂O₄ where O≦x≦1.

2. A molding as claimed in claim 1 in the form of a reaction vessel.

3. The use of a molding composed of sintered indate or indate solidified from the melt as claimed in claim 1 as a reaction vessel for chemical reactions in the presence of molten bismuth(III) oxide at temperatures of at least 800°C.

4. The use of a molding of sintered indate or indate solidified from the melt as claimed in claim 1 as a reaction vessel for chemical reactions in the presence of alkaline earth metal oxides at temperatures of at least 800°C.

5. The use of a molding, especially a plate, of compact strontium indate, SrIn₂O₄, for producing layers of superconductive oxidic material.

6. A process for producing a sintered molding, which comprises compacting a fine powder composed of calcium indate, strontium indate and/or an indate of the formula SrₓCa₁₋ₓIn₂O₄ with 0<x<1, if appropriate with the addition of a binder, to give a molding and heating the latter for several hours to temperatures from 1000 to 1500°C.

7. A process for producing a sintered molding composed of SrₓCa₁₋ₓIn₂O₄ where O≦x≦1, which comprises molding and sintering or allowing to solidify from the melt a pulverulent equimolar mixture of In₂O₃ and at least one alkaline earth metal oxide from the group comprising CaO and SrO.

## Revendications

1. Corps moulé en indate polycristallin compact de formule
SrₓCa₁₋ₓIn₂0₄ avec 0 ≦ x ≦ 1

2. Corps moulé selon la revendication 1, sous forme d'un récipient pour réaction ou réacteur.

3. Utilisation d'un corps moulé en indate fritté ou solidifié à partir de la masse fondue, selon la revendication 1, à titre de réacteur pour des réactions chimiques en présence de 3-oxyde de bismuth fondu, à des températures d'au moins 800°C.

4. Utilisation d'un corps moulé en indate fritté ou solidifié à partir de la masse fondue, selon la revendication 1, comme réacteur pour des réactions chimiques en présence d'oxydes alcalino terreux à des températures d'au moins 800°C.

5. Utilisation d'un corps moulé, en particulier d'une plaque, en indate de strontium compact, SrIn₂0₄, pour produire des couches en une matière oxydique supraconductrice.

6. Procédé pour produire un corps moulé fritté, procédé caractérisé en ce qu'on comprime une fine poudre consistant en de l'indate de calcium, de l'indate de strontium et/ou un indate de formule SrₓCa₁₋ₓIn₂0₄, avec 0≦x≦1, éventuellement avec addition d'un liant, pour obtenir un corps moulé et l'on chauffe celui-ci durant plusieurs heures à des températures de 1 000 à 1 500°C.

7. Procédé pour produire un corps moulé fritté consistant en SrₓCa 1₋ₓIn₂O₄ avec <x<1, procédé caractérisé en ce qu'on met en forme un mélange équimolaire pulvérulent de In₂O₃ et d'au moins un oxyde alcalino terreux de l'ensemble formé par CaO et SrO, et on le fritte ou on le laisse durcir à partir de la masse fondue.
